# EUROPÄISCHE PATENTSCHRIFT

(11) **EP 3 575 637 B1**
(45) Veröffentlichungstag und Bekanntmachung des Hinweises auf die Patenterteilung: **12.07.2023**
(21) Anmeldenummer: 19157779.0
(22) Anmeldetag: 18.02.2019
(51) Int. Cl.: F16H 57/021

(54) **KRAFTFAHRZEUG-ANTRIEBSANORDNUNG**
MOTOR VEHICLE DRIVE ASSEMBLY
SYST?ME D'ENTRAÎNEMENT DE VÉHICULE AUTOMOBILE

(30) Priorität: 28.05.2018 DE 102018112703
(43) Veröffentlichungstag der Anmeldung: 04.12.2019
(73) Patentinhaber: HUF Hülsbeck & Fürst GmbH & Co. KG, 42551 Velbert (DE)
(72) Erfinder: KOCH, Andreas, 42579 Heiligenhaus (DE); TORKOWSKI, Thorsten, 45239 Essen (DE); WIETKAMP, Stephan, 48161 Münster (DE)
(74) Vertreter: Zenz Patentanwälte Partnerschaft mbB

(56) Entgegenhaltungen:
- EP-A2- 1 645 761
- WO-A1-2008/007736
- WO-A1-2015/036837
- WO-A1-2018/019864
- DE-A1- 10 242 570
- DE-A1-102014 212 133

## Beschreibung

Die Erfindung richtet sich auf eine Kraftfahrzeug-Antriebsanordnung, aufweisend ein Antriebsgehäuse, einen elektrischen Antriebsmotor, welcher ein Motorgehäuse aufweist und welcher innerhalb des Antriebsgehäuses angeordnet ist, eine das Motorgehäuse durchdringende Antriebswelle mit einem ersten Wellenabschnitt, welcher ein erstes freies Längsende aufweist und welcher aus dem Motorgehäuse an einer ersten Motorseite herausragt, und einem zweiten Wellenabschnitt, welcher mit einem zweiten freien Längsende aus dem Motorgehäuse an einer der ersten Motorseite gegenüberliegenden zweiten Motorseite herausragt, und eine Antriebsschnecke, welche an dem ersten Wellenabschnitt der Antriebswelle ausgebildet ist, und ein mechanisches Ausgleichselement, welches an dem Antriebsgehäuse angebracht ist und welches an dem ersten freien Längsende der Antriebswelle angeordnet ist, wobei das mechanische Ausgleichselement eine Bewegung der Antriebswelle in eine von der zweiten Motorseite zu der ersten Motorseite weisende Richtung relativ zum Antriebsgehäuse gegen eine von dem mechanischen Ausgleichselement ausgeübte Ausgleichskraft zulässt und das erste freie Längsende der Antriebswelle in Richtung der zweiten Motorseite drückt, wobei das Antriebsgehäuse eine Anschlagwandung mit einer Ausnehmung, in welcher das erste freie Längsende der Antriebswelle angeordnet ist, und ein Begrenzungselement aufweist, wobei das mechanische Ausgleichselement zwischen der Anschlagwandung und dem Begrenzungselement angeordnet ist.

Eine Kraftfahrzeug-Antriebsanordnung der eingangs bezeichneten Art ist beispielsweise aus der WO 2015/036837 A1 bekannt, wobei eine Kraftfahrzeug-Antriebsanordnung ferner als ein elektrischer Kleinstantrieb aus dem Stand der Technik bekannt ist und bei Kraftfahrzeugen zum Beispiel für Kraftfahrzeugschlösser, Zuziehhilfen oder für das Aus- und Einfahren von flächenbündigen Türaußengriffen verwendet wird. Bei der Verwendung bei einem flächenbündigen Türaußengriff ist eine Antriebswelle eines elektrischen Antriebsmotors während des Betriebs einer wechselnden Axialbelastung ausgesetzt, welche von einem Beschleunigen und Abbremsen bis hin zu einer Umkehrlage beim Wechsel vom Ausfahren zum Einfahren des Türgriffs reicht. Die in die Antriebswelle eingeleitete Axialbelastung führt zu einer unerwünschten Geräuschentwicklung bei bekannten Kraftfahrzeug-Antriebsanordnungen, wenn die Antriebswelle innerhalb des Antriebsgehäuses zwischen im Gehäuse festgelegten und unflexiblen Axialanschlägen ein axiales Längsspiel aufweist.

Ferner ist aus der WO 2018/019864 A1 eine Kraftfahrzeug-Antriebsanordnung mit einem Antriebsgehäuse, einem Antriebsmotor, welcher ein Motorgehäuse aufweist, und einer das Motorgehäuse durchdringenden Antriebswelle bekannt. Die Antriebswelle weist einen ersten Wellenabschnitt mit einem freien Längsende und einer Antriebsschnecke auf. An dem freien Längsende der Antriebswelle ist ein mechanisches Ausgleichselement angeordnet, welches eine Ausgleichskraft aufbringt, die einer Bewegung der Antriebswelle in eine von dem Motorgehäuse wegweisende Richtung zulässt und dieser Bewegung entgegenwirkt. Das mechanische Ausgleichselement umfasst ein Kontaktelement und ein Ausgleichsmittel, wobei das Kontaktelement an dem freien Längsende der Antriebswelle anliegt. Das Ausgleichsmittel ist zwischen zwei Armen des Kontaktelements angeordnet und wird bei einer Bewegung der Antriebswelle solange komprimiert, bis die freien Enden der Arme des Kontaktelements an einer Anlaufscheibe anliegen, wobei die Anlaufscheibe an einer Wandung des Antriebsgehäuses abgestützt ist.

Der Erfindung liegt die Aufgabe zugrunde eine Lösung zu schaffen, die auf konstruktiv einfache Weise eine verbesserte und für den Benutzer einen erhöhten Komfort aufweisende Kraftfahrzeug-Antriebsanordnung bereitstellt, durch welche der vorstehend genannte Nachteil vermieden wird und bei welcher der Fahrzeuginhaber keine Geräuschentwicklung durch eine wechselnde Axialbelastung der Antriebswelle wahrnimmt.

Bei einer Kraftfahrzeug-Antriebsanordnung der eingangs bezeichneten Art wird die Aufgabe erfindungsgemäß dadurch gelöst, dass das mechanische Ausgleichselement ein Kontaktelement aus einem verschleißfesten Material aufweist, welches an dem ersten freien Längsende der Antriebswelle anliegt und zwischen einer ersten Stellung, in welcher das Kontaktelement an der Anschlagwandung anliegt, und einer zweiten Stellung, in welcher das Kontaktelement beabstandet zu der Anschlagwandung angeordnet ist, bewegt wird, wobei zwischen dem Kontaktelement und dem Begrenzungselement ein elastisch verformbares Ausgleichsmittel angeordnet ist, und wobei das Kontaktelement mit einer Grundseite, welche in der ersten Stellung an der Anschlagwandung anliegt, und mit zwei sich von der Grundseite aus in Richtung des Begrenzungselements erstreckenden Bewegungsbegrenzungsarmen ausgebildet ist, welche in der zweiten Stellung an dem Begrenzungselement anliegen.

Vorteilhafte und zweckmäßige Ausgestaltungen und Weiterbildungen der Erfindung ergeben sich aus den Unteransprüchen.

Durch die Erfindung wird eine Kraftfahrzeug-Antriebsanordnung zur Verfügung gestellt, welche sich durch eine einfache und kostengünstige Konstruktion auszeichnet und dennoch eine Geräuschentwicklung infolge einer wechselnden Axialbelastung der Antriebswelle vermeidet. Dadurch, dass ein mechanisches Ausgleichselement eine Bewegung der Antriebswelle in eine von der zweiten Motorseite zu der ersten Motorseite weisenden Richtung relativ zum Antriebsgehäuse gegen eine von dem mechanischen Ausgleichselement ausgeübte Ausgleichskraft zulässt und gleichzeitig das erste freie Längsende der Antriebswelle in Richtung der zweiten Motorseite drückt, ist sichergestellt, dass die Antriebswelle spielfrei im Antriebsgehäuse angeordnet ist und keine Geräusche trotz wechselnder Axialbelastungen entstehen. Dabei kann das mechanische Ausgleichselement das zweite freie Längsende der Antriebswelle beispielsweise gegen einen im Antriebsgehäuse ausgebildeten Axialanschlag drücken. Erfindungsgemäß kann die Antriebswelle im Betrieb folglich eine axiale Auslenkung vollziehen, ohne dass dabei ein Spiel an dem ersten und zweien freien Längsende der Antriebswelle entsteht, denn das mechanische Ausgleichselement sorgt durch seine auf das erste freie Längsende der Antriebswelle wirkende Ausgleichskraft für die gewünschte Spielfreiheit der Antriebswelle.

Dadurch, dass das Antriebsgehäuse eine Anschlagwandung mit einer Ausnehmung, in welcher das erste freie Längsende der Antriebswelle angeordnet ist, und ein Begrenzungselement aufweist, wobei das mechanische Ausgleichselement zwischen der Anschlagwandung und dem Begrenzungselement angeordnet ist, weist die Erfindung im Unterschied zum Stand der Technik keinen Anschlag für die Antriebswelle, sondern eine Anschlagwandung und ein Begrenzungselement auf, welche dem mechanischen Ausgleichselement als Anschläge dienen, zwischen denen das mechanische Ausgleichselement agieren kann, um die Ausgleichskraft zu entfalten.

Für eine ausreichende Dauerfestigkeit des mechanischen Ausgleichselements weist das mechanische Ausgleichselement ein Kontaktelement aus einem verschleißfesten Material auf, welches an dem ersten freien Längsende der Antriebswelle anliegt und zwischen einer ersten Stellung, in welcher das Kontaktelement an der Anschlagwandung anliegt, und einer zweiten Stellung, in welcher das Kontaktelement beabstandet zu der Anschlagwandung angeordnet ist, bewegbar ist. Die Bewegbarkeit des Kontaktelements zwischen der ersten und der zweiten Stellung ermöglicht der Antriebswelle eine spielfreie Auslenkung in Längsrichtung. Dabei kann die zweite Stellung eine Stellung sein, in welcher das Kontaktelement an dem Begrenzungselement anliegt, so dass die maximale Auslenkung der Antriebswelle durch den Abstand zwischen der Anschlagwandung und dem Begrenzungselement definiert ist.

Gemäß einer Ausgestaltung der Erfindung ist es für die Befestigung des elastisch verformbaren Ausgleichsmittel vorteilhaft, wenn das elastisch verformbare Ausgleichsmittel zwischen den zwei Bewegungsbegrenzungsarmen angeordnet ist und einen Haltesteg, welcher in einer in dem Antriebsgehäuse ausgebildeten Halteausnehmung formschlüssig befestigt ist, und einen Verformungsabschnitt aufweist.

Das elastisch verformbare Ausgleichsmittel kann in der zweiten Stellung komprimiert sein. Denkbar ist aber auch eine reine Verformung des elastisch verformbaren Ausgleichsmittels, so dass die Erfindung in Ausgestaltung vorsieht, dass das in der zweiten Stellung zwischen den zwei Bewegungsbegrenzungsarmen ausgebildete Volumen größer ist als das Volumen des in der zweiten Stellung elastisch verformbaren Ausgleichsmittels.

Eine besonders kostengünstige Herstellung ist dadurch möglich, dass das elastisch verformbare Ausgleichsmittel aus einem ersten Kunststoff und das Antriebsgehäuse aus einem zweiten Kunststoff mittels Zweikomponenten-Spritzgießen hergestellt sind. Mit Hilfe des Zweikomponenten-Spritzgießen lassen sich harte, wie zum Beispiel für das Antriebsgehäuse, und weiche Kunststoffe, wie zum Beispiel für das elastisch verformbare Ausgleichmittel, kombinieren.

Bei Verwendung eines elektrischen Antriebsmotors, welcher sich nicht nur in einer ersten Drehrichtung, sondern auch in einer der ersten Drehrichtung entgegengesetzten Drehrichtung dreht, wie es beispielsweise für das Aus- und Einfahren von flächenbündigen Türgriffen erforderlich sein kann, besteht die Gefahr, dass die Antriebswelle von dem mechanischen Ausgleichselement weg ausgelenkt wird und sich dadurch störende Geräusche entwickeln können. Um dies zu vermeiden, sieht die Erfindung in weiterer Ausgestaltung ein mechanisches Zusatz-Ausgleichselement vor, welches an dem Antriebsgehäuse angebracht ist und welches an dem zweiten freien Längsende der Antriebswelle angeordnet ist, wobei das mechanische Zusatz-Ausgleichselement eine Bewegung der Antriebswelle in eine von der ersten Motorseite zu der zweiten Motorseite weisenden Richtung relativ zum Antriebsgehäuse gegen eine von dem mechanischen Zusatz-Ausgleichselement ausgeübte Ausgleichskraft zulässt und das zweite freie Längsende der Antriebswelle in Richtung der ersten Motorseite drückt. Auf diese Weise wirkt durch das mechanische Ausgleichselement und das mechanische Zusatz-Ausgleichselement auf die beiden freien Längsenden der Antriebswelle eine Vorspannkraft in Form der Ausgleichskraft, wobei eine Auslenkung der Antriebswelle durchaus möglich ist, ohne dass dabei eines der freien Längsenden geräuschvoll gegen einen Axialanschlag anschlägt.

Dabei kann das Zusatz-Ausgleichselement so ausgeführt sein, wie es vorstehend für das Ausgleichselement beschrieben wurde. Entsprechend weist in Ausgestaltung der Erfindung das Antriebsgehäuse eine weitere Anschlagwandung (Zusatz-Anschlagwandung) mit einer Ausnehmung, in welcher das zweite freie Längsende der Antriebswelle angeordnet ist, und ein weiteres Begrenzungselement (Zusatz-Begrenzungselement) auf, wobei das mechanische Zusatz-Ausgleichselement zwischen der weiteren Anschlagwandung und dem weiteren Begrenzungselement angeordnet ist.

Als Ausführungsbeispiel für das Zusatz-Ausgleichselement sieht die Erfindung vor, dass das mechanische Zusatz-Ausgleichselement ein weiteres Kontaktelement (Zusatz-Kontaktelement) aus einem verschleißfesten Material aufweist, welches an dem zweiten freien Längsende der Antriebswelle anliegt und zwischen einer ersten Stellung, in welcher das weitere Kontaktelement (Zusatz-Kontaktelement) an der weiteren Anschlagwandung anliegt, und einer zweiten Stellung, in welcher das weitere Kontaktelement beabstandet zu der weiteren Anschlagwandung angeordnet ist, bewegbar ist.

Für das weitere Kontaktelement (Zusatz-Kontaktelement) sieht die Erfindung in Ausgestaltung vor, dass das weitere Kontaktelement als ein Federblech ausgebildet ist, welches an dem Antriebsgehäuse kraftschlüssig befestigt ist.

Hinsichtlich der Vorspannung, mit welcher die Antriebswelle an ihren beiden freien Enden beaufschlagt ist, sieht die Erfindung in weiterer Ausgestaltung vor, dass zwischen dem weiteren Kontaktelement (Zusatz-Kontaktelement) und dem weiteren Begrenzungselement (Zusatz-Begrenzungselement) ein elastisch verformbares Ausgleichsmittel angeordnet ist.

Des Weiteren ist in Ausgestaltung der Erfindung vorgesehen, dass das weitere Kontaktelement ein Anlaufplättchen ist und das weitere elastisch verformbare Ausgleichsmittel plättchenförmig ausgebildet und an dem als eine Wandung ausgebildeten weiteren Begrenzungselement anliegt.

Schließlich sieht die Erfindung in Ausgestaltung vor, dass das weitere Kontaktelement (Zusatz-Kontaktelement) mit einer Grundseite, welche in der ersten Stellung an der weiteren Anschlagwandung anliegt, und mit zwei sich von der Grundseite aus in Richtung des weiteren Begrenzungselements erstreckenden Bewegungsbegrenzungsarmen ausgebildet ist, welche in der zweiten Stellung an dem weiteren Begrenzungselement anliegen.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte und bevorzugte Ausführungsbeispiele der Erfindung dargestellt sind.

In der Zeichnung zeigt:
Figur 1 eine perspektivische Ansicht auf eine erfindungsgemäße Kraftfahrzeug-Antriebsanordnung,
Figur 2 die in Figur 1 gezeigte Kraftfahrzeug-Antriebsanordnung, wobei ein Gehäusedeckel eines Antriebsgehäuses der Kraftfahrzeug-Antriebsanordnung demontiert angeordnet ist,
Figur 3 eine Draufsicht auf einen elektrischen Antriebsmotor und einem Schneckengetrieberad, welche innerhalb des Antriebsgehäuses der Kraftfahrzeug-Antriebsanordnung untergebracht sind,
Figur 4 eine perspektivische Detailansicht eines mechanischen Ausgleichselements gemäß einem ersten, nicht erfindungsgemäßen Ausführungsbeispiel der Kraftfahrzeug-Antriebsanordnung,
Figur 5 in Perspektivansicht ein Kontaktelement des mechanischen Ausgleichselements gemäß dem ersten, nicht erfindungsgemäßen Ausführungsbeispiel der Kraftfahrzeug-Antriebsanordnung,
Figur 6 eine weitere Perspektivansicht des nicht erfindungsgemäßen Kontaktelements aus Figur 5,
Figur 7 eine seitliche Ansicht auf das nicht erfindungsgemäße Kontaktelement aus Figur 5, wobei verschiedene Stellungen des Kontaktelements gezeigt sind,
Figur 8 eine perspektivische Detailansicht eines mechanischen Ausgleichselements gemäß einem zweiten, nicht erfindungsgemäßen Ausführungsbeispiel der Kraftfahrzeug-Antriebsanordnung,
Figur 9 eine Perspektivansicht eines Kontaktelements und eines elastisch verformbaren Ausgleichsmittels gemäß dem zweiten, nicht erfindungsgemäßen Ausführungsbeispiel der Kraftfahrzeug-Antriebsanordnung,
Figur 10 eine perspektivische Detailansicht des nicht erfindungsgemäßen Kontaktelements und des elastisch verformbaren Ausgleichsmittels,
Figur 11 eine perspektivische Detailansicht eines mechanischen Ausgleichselements gemäß einem dritten, erfindungsgemäßen Ausführungsbeispiel der Kraftfahrzeug-Antriebsanordnung,
Figur 12 in perspektivischer Ansicht das Antriebsgehäuse mit einer Halteausnehmung für ein elastisch verformbares Ausgleichsmittel gemäß dem dritten Ausführungsbeispiel der Kraftfahrzeug-Antriebsanordnung,
Figur 13 in Perspektivansicht das elastisch verformbare Ausgleichsmittel gemäß dem dritten Ausführungsbeispiel der Kraftfahrzeug-Antriebsanordnung,
Figur 14 in Perspektivansicht ein Kontaktelement gemäß dem dritten Ausführungsbeispiel der Kraftfahrzeug-Antriebsanordnung,
Figur 15 eine perspektivische Detailansicht auf das mechanische Ausgleichselement gemäß dem dritten Ausführungsbeispiel der Kraftfahrzeug-Antriebsanordnung, wobei das Kontaktelement in einer von einer Anschlagwandung des Antriebsgehäuses beabstandeten Stellung angeordnet ist,
Figur 16 eine Draufsicht auf eine Kraftfahrzeug-Antriebsanordnung gemäß einem vierten, erfindungsgemäßen Ausführungsbeispiel,
Figur 17 eine Draufsicht auf einen Detailbereich der in Figur 16 gezeigten Kraftfahrzeug-Antriebsanordnung,
Figur 18 eine perspektivische Draufsicht auf einen Detailbereich der in Figur 16 gezeigten Kraftfahrzeug-Antriebsanordnung und
Figur 19 eine weitere perspektivische Draufsicht auf den Detailbereich der in Figur 18 gezeigten Kraftfahrzeug-Antriebsanordnung.

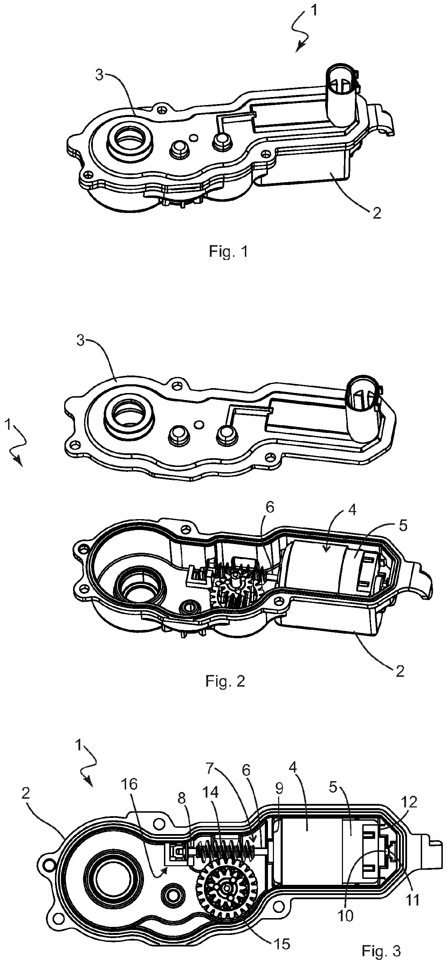

In den Figuren 1 bis 3 ist eine erfindungsgemäße Kraftfahrzeug-Antriebsanordnung 1 gezeigt, welche ein Antriebsgehäuse 2 aufweist, welches in Figur 1 von einem Gehäusedeckel 3 verschlossen ist. In Figur 2 ist der Gehäusedeckel 3 von dem Antriebsgehäuse 2 demontiert, so dass in Zusammenschau mit Figur 3 zu erkennen ist, dass die Kraftfahrzeug-Antriebsanordnung 1 ferner einen elektrischen Antriebsmotor 4 mit einem Motorgehäuse 5 und eine Antriebswelle 6 umfasst, wobei der elektrische Antriebsmotor 4 und die Antriebswelle 6 gemeinsam innerhalb des Antriebsgehäuses 2 angeordnet und untergebracht sind. Wie aus Figur 3 ersichtlich ist, durchdringt die Antriebswelle 6 das Motorgehäuse 5, wobei die Antriebswelle 6 einen ersten Wellenabschnitt 7, welcher ein erstes freies Längsende 8 aufweist und welcher aus dem Motorgehäuse 5 an einer ersten Motorseite 9 herausragt, und einen zweiten Wellenabschnitt 10, welcher mit einem zweiten freien Längsende 11 aus dem Motorgehäuse 5 an einer der ersten Motorseite 9 gegenüberliegenden zweiten Motorseite 12 herausragt, aufweist. Eine Antriebsschnecke 14 ist dabei an dem ersten Wellenabschnitt 7 der Antriebswelle 6 ausgebildet und treibt ein Schneckenrad 15 an, welches drehbar in dem Antriebsgehäuse 2 gelagert ist.

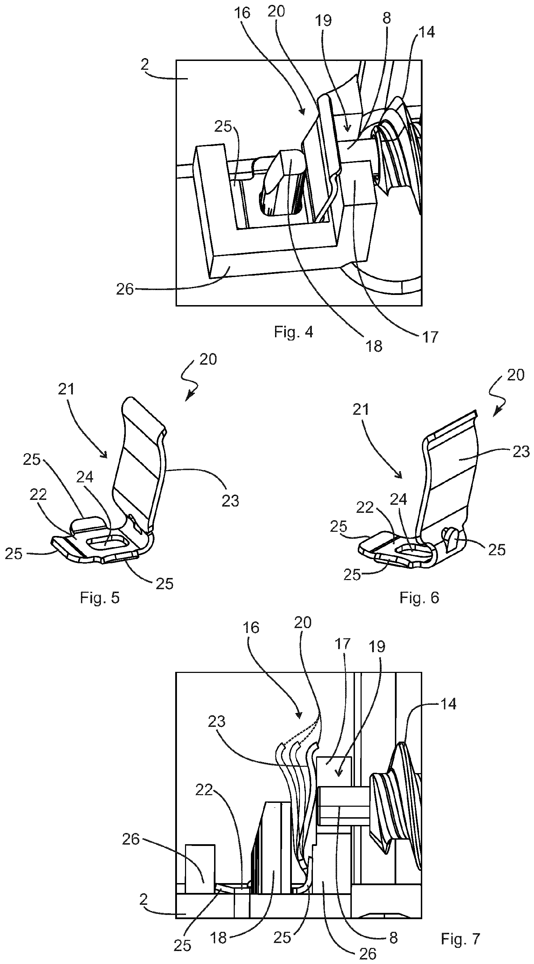

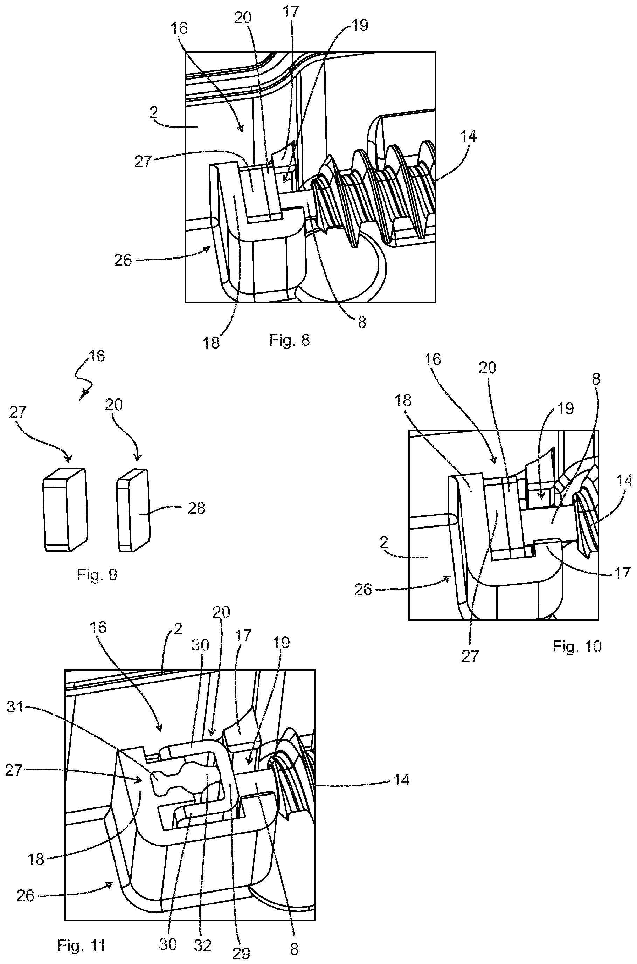

Gemäß der Erfindung, die in Figur 3 nur schematisch angedeutet ist, weist die Kraftfahrzeug-Antriebsanordnung 1 ferner ein mechanisches Ausgleichselement 16 auf, welches an dem Antriebsgehäuse 2 angebracht ist. Das mechanische Ausgleichselement 16 ist an dem ersten freien Längsende 8 der Antriebswelle 6 angeordnet und lässt eine Bewegung der Antriebswelle 6 in eine von der zweiten Motorseite 12 zu der ersten Motorseite 9 weisende Richtung relativ zum Antriebsgehäuse 2 gegen eine von dem mechanischen Ausgleichselement 16 ausgeübte Ausgleichskraft zu, wobei das mechanische Ausgleichselement 16 das erste freie Längsende 8 der Antriebswelle 6 in Richtung der zweiten Motorseite 12 drückt. Das mechanische Ausgleichselement 16 ist folglich derart ausgebildet, dass es eine Auslenkung der Antriebswelle 6 in eine von der zweiten Motorseite 12 zu der ersten Motorseite 9 weisende Richtung zulässt, wobei bei einer solchen Auslenkung der Antriebswelle 6 das mechanische Ausgleichselement 16 eine Ausgleichskraft auf das erste freie Längsende 8 der ausgelenkten Antriebswelle 6 ausübt und mit dieser Ausgleichskraft auf das erste freie Längsende 8 in Richtung der zweiten Motorseite 12 drückt. Das mechanische Ausgleichselement 16 wird nachstehend im Detail anhand der Figuren 4 bis 15 für verschiedene Ausführungsbeispiele genauer beschrieben, wobei die Figuren 4 bis 7 ein erstes Ausführungsbeispiel, die Figuren 8 bi 10 ein zweites Ausführungsbeispiel und die Figuren 11 bis 15 ein drittes Ausführungsbeispiel zeigen.

Bei dem in den Figuren 4 bis 7 gezeigten ersten, nicht erfindungsgemäßen Ausführungsbeispiel weist das Antriebsgehäuse 2 eine Anschlagwandung 17 und ein Begrenzungselement 18 auf, die als Teil der Wandung des Antriebsgehäuses 2 ausgebildet sind. Dabei ist in der Anschlagwandung 17 eine Ausnehmung 19 ausgebildet, in welcher das erste freie Längsende 8 der Antriebswelle 6 angeordnet ist. Wie zum Beispiel aus Figur 4 erkennbar ist, ist das mechanische Ausgleichselement 16 zwischen der Anschlagwandung 17 und dem Begrenzungselement 18 angeordnet. Das mechanische Ausgleichselement 16 weist ein Kontaktelement 20 aus einem verschleißfesten Material auf. Aus Figur 7 ist zu erkennen, dass das Kontaktelement 20 an dem ersten freien Längsende 8 der Antriebswelle 6 anliegt, wobei das Kontaktelement 20 zwischen einer ersten Stellung, in welcher das Kontaktelement 20 an der Anschlagwandung 17 anliegt, und einer zweiten Stellung, in welcher das Kontaktelement 20 beabstandet zu der Anschlagwandung 17 angeordnet ist, bewegbar ist. Dabei kann die zweite Stellung eine Stellung sein, in welcher das Kontaktelement 20 an dem Begrenzungselement 18 anliegt, so dass eine maximale Auslenkung der Antriebswelle 6 durch einen Abstand zwischen der Anschlagwandung 17 und dem Begrenzungselement 18 definiert ist.

Wie insbesondere die Figuren 5 und 6 für das erste Ausführungsbeispiel zeigen, ist das Kontaktelement 20 als ein Federblech 21 ausgebildet. Das als Federelement 21 ausgebildete Kontaktelement 20 ist dabei an dem Antriebsgehäuse 2 kraftschlüssig befestigt, wobei das Kontaktelement 20 die Form einer Sitzschale mit einer Sitzfläche 22 und einer Rückenfläche 23 aufweist. Aus der Zusammenschau der Figuren 4 bis 7 geht hervor, dass das erste freie Längsende 8 der Antriebswelle 6 an der Rückenfläche 23 des Kontaktelements 20 anliegt. Insbesondere zeigt die Figur 7, dass sich bei einer Auslenkung der Antriebswelle 6 in Richtung des Begrenzungselements 18 nur die Rückenfläche 23 des Kontaktelements 20 in Richtung des Begrenzungselements 18 bewegt, wohingegen die Sitzfläche 22 des Kontaktelements 20 unverändert ihre Stellung beibehält. Wie aus den Figuren 5 und 6 ferner zu erkennen ist, ist in der Sitzfläche 22 eine Durchgangsöffnung 24 ausgebildet, durch welche sich das Begrenzungselement 18 hindurch erstreckt. Dabei erstreckt sich das Begrenzungselement 18 im Wesentlichen parallel zu der Rückenfläche 23. Zur kraftschlüssigen Befestigung des Kontaktelements 20 an dem Antriebsgehäuse 2 ist bei dem ersten Ausführungsbeispiel vorgesehen, dass das Antriebsgehäuse 2 eine Aufnahmeumrandung 26 aufweist. Die Größe der Aufnahmeumrandung 26 ist an die Grundfläche der Sitzfläche 22 derart angepasst, dass Fixierungskrallen 25, welche seitlich von der Sitzfläche 22 abstehen und geneigt zu der Sitzfläche 22 verlaufend ausgerichtet sind, sich an der Aufnahmeumrandung 26 verkrallen, wodurch das Kontaktelement 20 an dem Antriebsgehäuse 2 kraftschlüssig befestigt ist. Bei dem ersten Ausführungsbeispiel ist die Anschlagwandung 17 als ein Abschnitt der Aufnahmeumrandung 26 ausgebildet. Es versteht sich, dass statt einer Vielzahl von Fixierungskrallen 25 auch eine einzige Fixierungskralle 25 ausreichen kann, um das Kontaktelement 20 an dem Antriebsgehäuse 2 zu befestigen. In einem eingebauten Zustand des mechanischen Ausgleichselements 16 drückt das erste freie Längsende 8 der Antriebswelle 6 auf das Kontaktelement 20, so dass das Federblech 21 bereits ausgelenkt in Richtung des Begrenzungselements 18 angeordnet ist und folglich das mechanische Ausgleichselement 16 unter einer vorbestimmten Vorspannung steht.

Für die beiden in den Figuren 8 bis 15 gezeigten Ausführungsbeispiele, d.h. für das zweite, nicht erfindungsgemäße und dritte, erfindungsgemäße Ausführungsbeispiel, ist es charakteristisch, dass zwischen dem Kontaktelement 20 und dem Begrenzungselement 18 ein elastisch verformbares Ausgleichsmittel 27 angeordnet ist. Mit anderen Worten umfasst bei dem zweiten und dritten Ausführungsbeispiel das mechanische Ausgleichselement 16 das aus einem verschleißfesten Material bestehende Kontaktelement 20 und das elastisch verformbare Ausgleichsmittel 27.

Bei dem zweiten, nicht erfindungsgemäßen Ausführungsbeispiel, welches in den Figuren 8 bis 10 gezeigt ist, weist das Antriebsgehäuse 2 wiederum eine Anschlagwandung 17 und ein Begrenzungselement 18 auf, die von der Wandung des Antriebsgehäuses 2 ausgebildet sind. In der Anschlagwandung 17 ist ebenfalls eine Ausnehmung 19 ausgebildet, in welcher das erste freie Längsende 8 der Antriebswelle 6 angeordnet ist. Wie zum Beispiel aus Figur 8 erkennbar ist, ist das mechanische Ausgleichselement 16 zwischen der Anschlagwandung 17 und dem als Wandung ausgebildeten Begrenzungselement 18 angeordnet. Das mechanische Ausgleichselement 16 weist auch bei dem zweiten Ausführungsbeispiel ein Kontaktelement 20 aus einem verschleißfesten Material auf. Mit Bezug auf Figur 8 liegt das Kontaktelement 20 an dem ersten freien Längsende 8 der Antriebswelle 6 an. Das Kontaktelement 20 ist auch hier wieder zwischen einer ersten Stellung, in welcher das Kontaktelement 20 an der Anschlagwandung 17 anliegt (siehe Figur 8), und einer zweiten Stellung, in welcher das Kontaktelement 20 beabstandet zu der Anschlagwandung 17 angeordnet ist (siehe Figur 10), bewegbar. Das Kontaktelement 20 ist bei dem zweiten Ausführungsbeispiel ein Anlaufplättchen 28, wohingegen das elastisch verformbare Ausgleichsmittel 27 plättchenförmig ausgebildet ist. Ferner liegt das elastisch verformbare Ausgleichsmittel 27 an dem als eine Wandung ausgebildeten Begrenzungselement 18 an. Bei einer Auslenkbewegung der Antriebswelle 6 in Richtung des Begrenzungselements 18 drückt das erste freie Längsende 8 der Antriebswelle 6 gegen das als Anlaufplättchen 28 ausgebildete Kontaktelement 20, wodurch sich das Kontaktelement 20 aus der ersten Stellung, in welcher das Kontaktelement 20 an der Anschlagwandung 17 anliegt (siehe Figur 8), in Richtung des Begrenzungselements 18 bewegt und dabei das elastisch verformbare Ausgleichsmittel 27 komprimiert (siehe Figur 10). Das Antriebsgehäuse 2 weist auch bei dem zweiten Ausführungsbeispiel eine Aufnahmeumrandung 26 auf, in welcher das Kontaktelement 20 und das elastisch verformbare Ausgleichsmittel 27 bewegbar angeordnet sind. Dabei sind die Anschlagwandung 17 und das wandförmig ausgebildete Begrenzungselement 18 als jeweilige Abschnitte der Aufnahmeumrandung 26 ausgebildet. In einem eingebauten Zustand drückt das erste freie Längsende 8 der Antriebswelle 6 auf das Kontaktelement 20, so dass das elastisch verformbare Ausgleichsmittel 27 bereits komprimiert ist und folglich das mechanische Ausgleichselement 16 unter einer vorbestimmten Vorspannung steht. Andererseits erzeugt das mechanische Ausgleichselement 16 direkt nach Montage der Antriebswelle 6 bzw. des Antriebsmotors 4 eine Ausgleichskraft, so dass mechanische Ausgleichselement 16 die Antriebswelle 6 in Richtung der zweiten Motorseite 12 drückt.

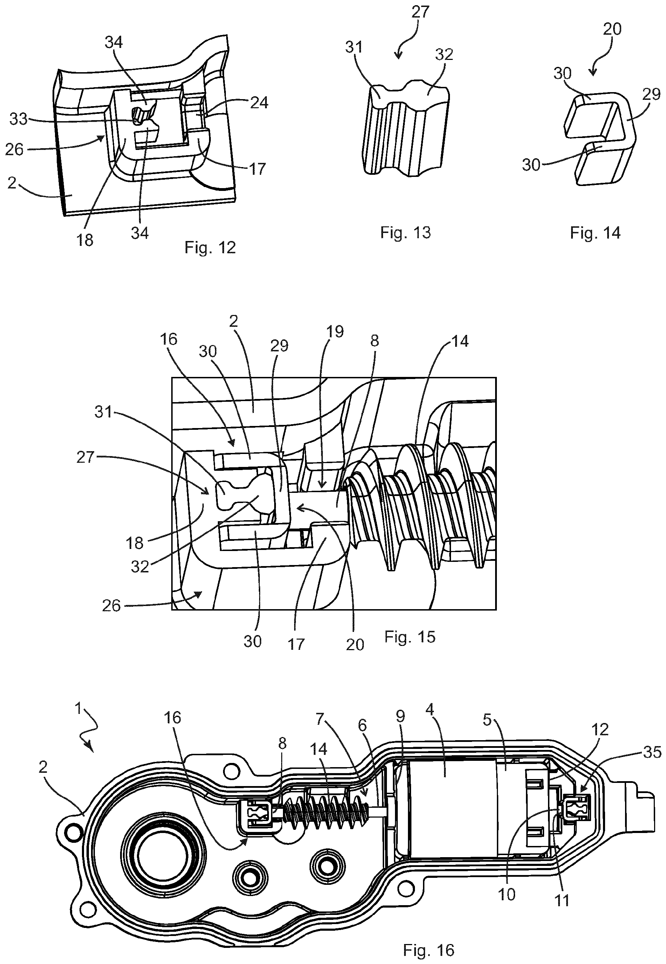

Das dritte, erfindungsgemäße Ausführungsbeispiel ist in den Figuren 11 bis 15 gezeigt, wobei das Antriebsgehäuse 2 wie zuvor eine Anschlagwandung 17 und ein Begrenzungselement 18 aufweist, die als Teil der Wandung des Antriebsgehäuses 2 ausgebildet sind. Auch ist in der Anschlagwandung 17 eine Ausnehmung 19 ausgebildet, in welcher das erste freie Längsende 8 der Antriebswelle 6 angeordnet ist. Wie zum Beispiel aus Figur 11 erkennbar ist, ist das mechanische Ausgleichselement 16 zwischen der Anschlagwandung 17 und dem Begrenzungselement 18 angeordnet. Das mechanische Ausgleichselement 16 weist - wie bei den anderen Ausführungsbeispielen auch - ein Kontaktelement 20 aus einem verschleißfesten Material auf. Figur 11 zeigt, dass das Kontaktelement 20 an dem ersten freien Längsende 8 der Antriebswelle 6 anliegt, wobei das Kontaktelement 20 zwischen einer ersten Stellung, in welcher das Kontaktelement 20 an der Anschlagwandung 17 anliegt (siehe Figur 11), und einer zweiten Stellung, in welcher das Kontaktelement 20 beabstandet zu der Anschlagwandung 17 angeordnet ist (siehe Figur 15), bewegbar ist. Die zweite Stellung kann insbesondere eine Stellung sein, in welcher das Kontaktelement 20 an dem Begrenzungselement 18 anliegt, so dass eine maximale Auslenkung der Antriebswelle 6 durch einen Abstand zwischen der Anschlagwandung 17 und dem Begrenzungselement 18 definiert ist, wie es in Figur 15 gezeigt ist.

Wie den Figuren 11, 14 und 15 zu entnehmen ist, ist das Kontaktelement 20 mit einer Grundseite 29, welche in der ersten Stellung an der Anschlagwandung 17 anliegt (siehe Figur 11), und mit zwei sich von der Grundseite 29 aus in Richtung des Begrenzungselements 18 erstreckenden Bewegungsbegrenzungsarmen 30 ausgebildet, welche mit ihren freien Enden in der zweiten Stellung an dem Begrenzungselement 18 anliegen (siehe Figur 15). Das Kontaktelement 20 ist in eine an dem Antriebsgehäuse 2 ausgebildete Aufnahmeumrandung 26 eingesetzt und kann sich innerhalb der Aufnahmeumrandung 26 in Längsrichtung der Antriebswelle 6 bewegen.

Das mechanische Ausgleichselement 16 des dritten Ausführungsbeispiels weist auch ein elastisch verformbares Ausgleichsmittel 27 auf. Das elastisch verformbare Ausgleichsmittel 27 ist zwischen den zwei Bewegungsbegrenzungsarmen 30 angeordnet und weist einen Haltesteg 31 und einen Verformungsabschnitt 32 auf. Dabei ist der Haltesteg 31 in einer in dem Antriebsgehäuse 2 ausgebildeten Halteausnehmung 33 formschlüssig befestigt. Das elastisch verformbare Ausgleichsmittel 27 kann aus einem ersten Kunststoff und das Antriebsgehäuse 2 aus einem zweiten Kunststoff mittels Zweikomponenten-Spritzgießen hergestellt sein. Die Wandung, welche die Halteausnehmung 33 definieren, bilden Führungsabschnitte 34, welche eine Bewegung des Kontaktelements 20 zwischen der ersten und zweiten Stellung führen. Dabei umgreifen die Bewegungsbegrenzungsarme 30 die Führungsabschnitte 34, wobei die Führungsabschnitte 34 innenseitig an den Bewegungsbegrenzungsarmen 30 anliegen. Wie aus Figur 15 zu erkennen ist, ist das in der zweiten Stellung zwischen den zwei Bewegungsbegrenzungsarmen 30 ausgebildete Volumen größer als das Volumen des in der zweiten Stellung angeordneten elastisch verformbaren Ausgleichsmittels 27. In einem eingebauten Zustand drückt das erste freie Längsende 8 der Antriebswelle 6 auf das Kontaktelement 20, so dass das elastisch verformbare Ausgleichsmittel 27 bereits komprimiert ist und folglich das mechanische Ausgleichselement 16 unter einer vorbestimmten Vorspannung steht. Die Antriebswelle 6 ist auf diese Weise spielfrei gelagert.

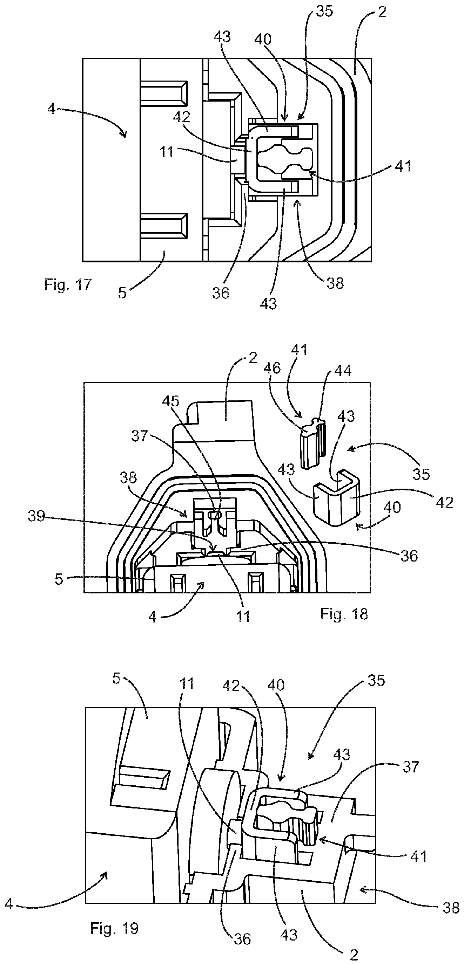

Die Figuren 16 bis 19 zeigen ein weiteres, erfindungsgemäßes Ausführungsbeispiel, bei welchem zusätzlich zu dem mechanischen Ausgleichselement 16 an dem ersten freien Längsende 8 der Antriebswelle 6 ein mechanisches Zusatz-Ausgleichselement 35 vorgesehen ist, welches an dem Antriebsgehäuse 2 angebracht ist und welches an dem zweiten freien Längsende 11 der Antriebswelle 6 angeordnet ist. Das mechanische Zusatz-Ausgleichselement 35 lässt eine Bewegung der Antriebswelle 6 in eine von der ersten Motorseite 9 zu der zweiten Motorseite 12 weisende Richtung relativ zum Antriebsgehäuse 2 gegen eine von dem mechanischen Zusatz-Ausgleichselement 35 ausgeübte Ausgleichskraft zu und drückt das zweite freie Längsende 11 der Antriebswelle 6 in Richtung der ersten Motorseite 9. Das an dem ersten freien Längsende 8 angeordnete mechanische Ausgleichselement 16 entspricht der Ausführung gemäß dem dritten Ausführungsbeispiel, wobei auch eine Ausführung des mechanischen Ausgleichselements 16 entsprechend dem ersten oder zweiten Ausführungsbeispiel denkbar ist. Das mechanische Zusatz-Ausgleichselement 35 entspricht im Wesentlichen der Ausgestaltung des dritten Ausführungsbeispiels, wie den Figuren 16 bis 19 zu entnehmen ist. Dementsprechend weist das Antriebsgehäuse 2 eine weitere Anschlagwandung bzw. Zusatz-Anschlagwandung 36 und ein weiteres Begrenzungselement bzw. Zusatz-Begrenzungselement 37 auf, wobei die Zusatz-Anschlagwandung 36 und das Zusatz-Begrenzungselement 37 als Wandungsabschnitte einer Zusatz-Aufnahmeumrandung 38 des Antriebsgehäuses 2 ausgebildet sind, in welcher das mechanische Zusatz-Ausgleichselement 35 angeordnet ist. Insbesondere ist das mechanische Zusatz-Ausgleichselement 35 zwischen der Zusatz-Anschlagwandung 36 und dem Zusatz-Begrenzungselement 37 angeordnet, wie den Figuren 17 bis 19 zu entnehmen ist. Die Zusatz-Anschlagwandung 36 weist eine Ausnehmung 39 auf, in welcher das zweite freie Längsende 11 der Antriebswelle 6, welches mit dem mechanischen Zusatz-Ausgleichselement 35 zusammenwirkt, angeordnet ist.

Entsprechend dem dritten Ausführungsbeispiel weist das mechanische Zusatz-Ausgleichselement 35 ein weiteres Kontaktelement bzw. Zusatz-Kontaktelement 40 auf, welches aus einem verschleißfesten Material gebildet ist. Das weitere Kontaktelement bzw. Zusatz-Kontaktelement 40 liegt an dem zweiten freien Längsende 11 der Antriebswelle 6 an und ist bewegbar zwischen einer ersten Stellung, in welcher das weitere Kontaktelement bzw. Zusatz-Kontaktelement 40 an der weiteren Anschlagwandung bzw. Zusatz-Anschlagwandung 36 anliegt, und einer zweiten Stellung, in welcher das weitere Kontaktelement bzw. Zusatz-Kontaktelement 40 beabstandet zu der weiteren Anschlagwandung 36 angeordnet ist. Wie bei dem dritten Ausführungsbeispiel, so ist auch bei dem in den Figuren 16 bis 19 gezeigten Ausführungsbeispiel für das mechanische Zusatz-Ausgleichselement 35 vorgesehen, dass zwischen dem weiteren Kontaktelement 40 und dem weiteren Begrenzungselement 37 ein elastisch verformbares Ausgleichsmittel 41 angeordnet ist. Das Zusatz-Kontaktelement 40 ist - wie bei dem dritten Ausführungsbeispiel - mit einer Grundseite 42 und zwei sich von der Grundseite aus erstreckenden Bewegungsbegrenzungsarmen 43 ausgebildet. Die Grundseite 42 liegt in der ersten Stellung an der Zusatz-Anschlagwandung 36 an (siehe Figuren 17 und 19), wohingegen die zwei sich von der Grundseite 42 aus in Richtung des Zusatz-Begrenzungselements 37 erstreckenden Bewegungsbegrenzungsarme 43 in einer zweiten Stellung an dem Zusatz-Begrenzungselement 37 anliegen können. Wie beispielsweise Figur 17 oder 19 zu entnehmen ist, ist das elastisch verformbare Ausgleichsmittel 41 zwischen den zwei Bewegungsbegrenzungsarmen 43 angeordnet und weist einen in einer in dem Antriebsgehäuse 2 ausgebildeten Halteausnehmung 45 formschlüssig befestigten Haltesteg 44 und einen Verformungsabschnitt 46 auf. Die Funktionsweise des in den Figuren 16 bis 19 gezeigten Ausführungsbeispiels ist für das mechanische Zusatz-Ausgleichselement 35 im Wesentlichen identisch zu der Funktionsweise des mechanischen Ausgleichselements 16, so dass auf die entsprechenden Ausführungen verwiesen sei.

Bei dem in den Figuren 16 bis 19 gezeigten Ausführungsbeispiel kann alternativ das weitere Kontaktelement bzw. Zusatz-Kontaktelement 40 als ein Federblech ausgebildet sein, wie es für das erste Ausführungsbeispiel beschrieben wurde. Denkbar ist es auch, dass das weitere Kontaktelement bzw. Zusatz-Kontaktelement 40 ein Anlaufplättchen ist, wobei das weitere elastisch verformbare Ausgleichsmittel 41 dann plättchenförmig ausgebildet und an dem als eine Wandung ausgebildeten Zusatz-Begrenzungselement 37 anliegt. Es ist auch denkbar, dass das mechanische Ausgleichselemente 16 und das mechanische Zusatz-Ausgleichselement 37 eine unterschiedliche Ausführung aufweisen.

Zusammenfassend richtet sich die Erfindung auf eine wie vorstehend beschriebene Kraftfahrzeug-Antriebsanordnung 1, bei welcher eine Auslenkung der Antriebswelle 6 des elektrischen Antriebsmotors 4 innerhalb des Antriebsgehäuses 2 toleriert wird und die Antriebswelle 6 zumindest an ihrem ersten freien Längsende 8 mit Hilfe des mechanischen Ausgleichselements 16 spielfrei gehalten ist, indem das mechanische Ausgleichselement 16 eine Bewegung der Antriebswelle 6 in eine von der zweiten Motorseite 12 zu der ersten Motorseite 9 weisende Richtung relativ zum Antriebsgehäuse 2 gegen eine von dem mechanischen Ausgleichselement 16 ausgeübte Ausgleichskraft zulässt und das erste freie Längsende 8 der Antriebswelle 6 in Richtung der zweiten Motorseite 12 drückt. Eine Auslenkbewegung der Antriebswelle 6 ist dabei für eine zwischen der Anschlagwandung 17 und dem Begrenzungselement 18 liegenden Distanz möglich. Zusätzlich kann zur spielfreien Lagerung der Antriebswelle 6 ein mechanisches Zusatz-Ausgleichselement 35 vorgesehen sein, welches an dem zweiten freien Längsende 11 der Antriebswelle 6 angeordnet ist, wobei das mechanische Zusatz-Ausgleichselement 35 eine Bewegung der Antriebswelle 6 in eine von der ersten Motorseite 9 zu der zweiten Motorseite 12 weisende Richtung relativ zum Antriebsgehäuse 2 gegen eine von dem mechanischen Zusatz-Ausgleichselement 35 ausgeübte Ausgleichskraft zulässt und das zweite freie Längsende 11 der Antriebswelle 6 in Richtung der ersten Motorseite 9 drückt. Dabei können das mechanische Ausgleichelement 16 und das mechanische Zusatz-Ausgleichelement 35 entweder identisch oder unterschiedlich ausgeführt und entsprechend dem beschriebenen ersten, zweiten oder dritten Ausführungsbeispiel ausgebildet sein. mechanische Ausgleichelement 16 und das mechanische Zusatz-Ausgleichelement 35 entweder identisch oder unterschiedlich ausgeführt und entsprechend dem beschriebenen ersten, zweiten oder dritten Ausführungsbeispiel ausgebildet sein.

Die beschriebene Erfindung ist selbstverständlich nicht auf die beschriebenen und dargestellten Ausführungsformen beschränkt, sondern durch die angefügten Ansprüche definiert.

## Patentansprüche

1. Kraftfahrzeug-Antriebsanordnung (1), aufweisend
ein Antriebsgehäuse (2),
einen elektrischen Antriebsmotor (4), welcher ein Motorgehäuse (5) aufweist und welcher innerhalb des Antriebsgehäuses (2) angeordnet ist,
eine das Motorgehäuse (5) durchdringende Antriebswelle (6) mit einem ersten Wellenabschnitt (7), welcher ein erstes freies Längsende (8) aufweist und welcher aus dem Motorgehäuse (5) an einer ersten Motorseite (9) herausragt, und einem zweiten Wellenabschnitt (10), welcher mit einem zweiten freien Längsende (11) aus dem Motorgehäuse (5) an einer der ersten Motorseite (9) gegenüberliegenden zweiten Motorseite (12) herausragt, und
eine Antriebsschnecke (14), welche an dem ersten Wellenabschnitt (7) der Antriebswelle (6) ausgebildet ist, und
ein mechanisches Ausgleichselement (16), welches an dem Antriebsgehäuse (2) angebracht ist und welches an dem ersten freien Längsende (8) der Antriebswelle (6) angeordnet ist,
wobei das mechanische Ausgleichselement (16) eine Bewegung der Antriebswelle (6) in eine von der zweiten Motorseite (12) zu der ersten Motorseite (9) weisende Richtung relativ zum Antriebsgehäuse (2) gegen eine von dem mechanischen Ausgleichselement (16) ausgeübte Ausgleichskraft zulässt und das erste freie Längsende (8) der Antriebswelle (6) in Richtung der zweiten Motorseite (12) drückt,
wobei das Antriebsgehäuse (2) eine Anschlagwandung (17) mit einer Ausnehmung (19), in welcher das erste freie Längsende (8) der Antriebswelle (6) angeordnet ist, und ein Begrenzungselement (18) aufweist, wobei das mechanische Ausgleichselement (16) zwischen der Anschlagwandung (17) und dem Begrenzungselement (18) angeordnet ist,
**dadurch gekennzeichnet, dass**
das mechanische Ausgleichselement (16) ein Kontaktelement (20) aus einem verschleißfesten Material aufweist, welches an dem ersten freien Längsende (8) der Antriebswelle (6) anliegt und zwischen einer ersten Stellung, in welcher das Kontaktelement (20) an der Anschlagwandung (17) anliegt, und einer zweiten Stellung, in welcher das Kontaktelement (20) beabstandet zu der Anschlagwandung (17) angeordnet ist, bewegt wird,
wobei zwischen dem Kontaktelement (20) und dem Begrenzungselement (18) ein elastisch verformbares Ausgleichsmittel (27) angeordnet ist, und
wobei das Kontaktelement (20) mit einer Grundseite (29), welche in der ersten Stellung an der Anschlagwandung (17) anliegt, und mit zwei sich von der Grundseite (29) aus in Richtung des Begrenzungselements (18) erstreckenden Bewegungsbegrenzungsarmen (30) ausgebildet ist, welche in der zweiten Stellung an dem Begrenzungselement (18) anliegen.

2. Kraftfahrzeug-Antriebsanordnung (1) nach Anspruch 1, **dadurch gekennzeichnet, dass** das elastisch verformbare Ausgleichsmittel (27) zwischen den zwei Bewegungsbegrenzungsarmen (30) angeordnet ist und einen Haltesteg (31), welcher in einer in dem Antriebsgehäuse (2) ausgebildeten Halteausnehmung (33) formschlüssig befestigt ist, und einen Verformungsabschnitt (32) aufweist.

3. Kraftfahrzeug-Antriebsanordnung (1) nach Anspruch 2, **dadurch gekennzeichnet, dass** das in der zweiten Stellung zwischen den zwei Bewegungsbegrenzungsarmen (30) ausgebildete Volumen größer ist als das Volumen des in der zweiten Stellung angeordneten elastisch verformbaren Ausgleichsmittels (27).

4. Kraftfahrzeug-Antriebsanordnung (1) nach Anspruch 2, **dadurch gekennzeichnet, dass** das elastisch verformbare Ausgleichsmittel (27) aus einem ersten Kunststoff und das Antriebsgehäuse (2) aus einem zweiten Kunststoff mittels Zweikomponenten-Spritzgießen hergestellt ist.

5. Kraftfahrzeug-Antriebsanordnung (1) nach Anspruch 1, **gekennzeichnet durch** ein mechanisches Zusatz-Ausgleichselement (35), welches an dem Antriebsgehäuse (2) angebracht ist und welches an dem zweiten freien Längsende (11) der Antriebswelle (6) angeordnet ist, wobei das mechanische Zusatz-Ausgleichselement (35) eine Bewegung der Antriebswelle (6) in eine von der ersten Motorseite (9) zu der zweiten Motorseite (12) weisende Richtung relativ zum Antriebsgehäuse (2) gegen eine von dem mechanischen Zusatz-Ausgleichselement (35) ausgeübte Ausgleichskraft zulässt und das zweite freie Längsende (11) der Antriebswelle (6) in Richtung der ersten Motorseite (9) drückt.

6. Kraftfahrzeug-Antriebsanordnung (1) nach Anspruch 5, **dadurch gekennzeichnet, dass** das Antriebsgehäuse (2) eine weitere Anschlagwandung (36) mit einer Ausnehmung (39), in welcher das zweite freie Längsende (11) der Antriebswelle (6) angeordnet ist, und ein weiteres Begrenzungselement (37) aufweist, wobei das mechanische Zusatz-Ausgleichselement (35) zwischen der weiteren Anschlagwandung (36) und dem weiteren Begrenzungselement (37) angeordnet ist.

7. Kraftfahrzeug-Antriebsanordnung (1) nach Anspruch 6, **dadurch gekennzeichnet, dass** das mechanische Zusatz-Ausgleichselement (35) ein weiteres Kontaktelement (40) aus einem verschleißfesten Material aufweist, welches an dem zweiten freien Längsende (11) der Antriebswelle (6) anliegt und zwischen einer ersten Stellung, in welcher das weitere Kontaktelement (40) an der weiteren Anschlagwandung (36) anliegt, und einer zweiten Stellung, in welcher das weitere Kontaktelement (40) beabstandet zu der weiteren Anschlagwandung (36) angeordnet ist, bewegbar ist.

8. Kraftfahrzeug-Antriebsanordnung (1) nach Anspruch 7, **dadurch gekennzeichnet, dass** das weitere Kontaktelement (40) als ein Federblech ausgebildet ist, welches an dem Antriebsgehäuse (2) kraftschlüssig befestigt ist.

9. Kraftfahrzeug-Antriebsanordnung (1) nach Anspruch 7, **dadurch gekennzeichnet, dass** zwischen dem weiteren Kontaktelement (40) und dem weiteren Begrenzungselement (37) ein elastisch verformbares Ausgleichsmittel (41) angeordnet ist.

10. Kraftfahrzeug-Antriebsanordnung (1) nach Anspruch 9, **dadurch gekennzeichnet, dass** das weitere Kontaktelement (40) ein Anlaufplättchen ist und das weitere elastisch verformbare Ausgleichsmittel plättchenförmig ausgebildet und an dem als eine Wandung ausgebildeten weiteren Begrenzungselement anliegt.

11. Kraftfahrzeug-Antriebsanordnung (1) nach Anspruch 9, **dadurch gekennzeichnet, dass** das weitere Kontaktelement (40) mit einer Grundseite (42), welche in der ersten Stellung an der weiteren Anschlagwandung (36) anliegt, und mit zwei sich von der Grundseite (42) aus in Richtung des weiteren Begrenzungselements (37) erstreckenden Bewegungsbegrenzungsarmen (43) ausgebildet ist, welche in der zweiten Stellung an dem weiteren Begrenzungselement (37) anliegen.

## Claims

1. Motor vehicle drive assembly (1) having
a drive housing (2),
an electric drive motor (4) which has a motor housing (5) and is arranged within the drive housing (2),
a drive shaft (6) passing through the motor housing (5) with a first shaft portion (7), which portion has a first free longitudinal end (8) and protrudes from the motor housing (5) on a first side of the motor (9), and a second shaft portion (10) which protrudes from the motor housing (5) with a second free longitudinal end (11) on a second side of the motor (12) opposite to the first side of the motor (9), and
a worm screw (14) which is conformed on the first shaft portion (7) of the drive shaft (6), and
a mechanical compensation element (16) which is mounted on the drive housing (2) and arranged on the first free longitudinal end (8) of the drive shaft (6),
wherein the mechanical compensation element (16) allows a movement of the drive shaft (6) in a direction from the second side of the motor (12) towards the first side of the motor (9) relative to the drive housing (2) against a compensating force exerted by the mechanical compensation element (16) and urges the first free longitudinal end (8) of the drive shaft (6) in the direction of the second side of the motor (12),
wherein the drive housing (2) has an abutment wall (17) with a recess (19), in which the first free longitudinal end (8) of the drive shaft (6) is arranged, and a limiting element (18), wherein the mechanical compensation element (16) is arranged between the abutment wall (17) and the limiting element (18),
**characterized in that**
the mechanical compensation element (16) includes a contact element (20) made from a wear-resistant material that bears on the first free longitudinal end (8) of the drive shaft (6) and is moved between a first position, in which the contact element (20) bears on the abutment wall (17), and a second position, in which the contact element (20) is arranged at a distance from the abutment wall (17),
wherein an elastically deformable compensation means (27) is arranged between the contact element (20) and the limiting element (18), and
wherein the contact element (20) is constructed with a base side (29), which in the first position bears on the abutment wall (17), and with two motion limiting arms (30) extending from the base side (29) in the direction of the limiting element (18), which in the second position bear on the limiting element (18).

2. Motor vehicle drive assembly (1) according to Claim 1, **characterized in that** the elastically deformable compensation means (27) is arranged between the two motion limiting arms (30) and has a retention pin (31), which is secured in positive locking manner in a retaining recess (33) conformed in the drive housing (2), and has a deformation portion (32).

3. Motor vehicle drive assembly (1) according to Claim 2, **characterized in that** the volume created between the two motion limiting arms (30) in the second position is greater than the volume of the elastically deformable compensation means (27) arranged in the second position.

4. Motor vehicle drive assembly (l) according to Claim 2, **characterized in that** the elastically deformable compensation means (27) is produced from a first plastic, and the drive housing (2) is produced from a second plastic by two-component injection moulding.

5. Motor vehicle drive assembly (l) according to Claim 1, **characterized by** a auxiliary mechanical compensation element (35), which is attached to the drive housing (2), and which is arranged on the second free longitudinal end (11) of the drive shaft (6), wherein the auxiliary mechanical compensation element (35) allows a movement of the drive shaft (6) in a direction extending from the first side of the motor (9) to the second side of the motor (12) relative to the drive housing (2) against a compensating force exerted by the auxiliary mechanical compensation element (35) and urges the second free longitudinal end (11) of the drive shaft (6) in the direction of the first side of the motor (9).

6. Motor vehicle drive assembly (l) according to Claim 5, **characterized in that** the drive housing (2) has a further abutment wall (36) with a recess (39), in which the second free longitudinal end (11) of the drive shaft (6) is arranged, and a further limiting element (37), wherein the auxiliary mechanical compensation element (35) is arranged between the further abutment wall (36) and the further limiting element (37).

7. Motor vehicle drive assembly (l) according to Claim 6, **characterized in that** the auxiliary mechanical compensation element (35) has a further contact element (40) made from a wear-resistant material, which bears on the second free longitudinal end (11) of the drive shaft (6) and is movable between a first position, in which the further contact element (40) bears on the further abutment wall (36), and a second position, in which the further contact element (40) is arranged at a distance from the further abutment wall (36).

8. Motor vehicle drive assembly (l) according to Claim 7, **characterized in that** the further contact element (40) is designed as a spring plate which is attached in positive-locking manner to the drive housing (2).

9. Motor vehicle drive assembly (l) according to Claim 7, **characterized in that** an elastically deformable compensation means (41) is arranged between the further contact element (40) and the further limiting element (37) .

10. Motor vehicle drive assembly (l) according to Claim 9, **characterized in that** the further contact element (40) is an axial buffer plate, and the further elastically deformable compensation means is constructed in the form of a leaf and bears on the further limiting element, which is designed as a wall.

11. Motor vehicle drive assembly (l) according to Claim 9, **characterized in that** the further contact element (40) is constructed with a base side (42), which in the first position bears on the further abutment wall (36), and with two motion limiting arms (43) extending from the base side (42) in the direction of the further limiting element (37), which in the second position bear on the further limiting element (37).

## Revendications

1. Système d'entraînement de véhicule automobile (1), comportant
un carter d'entraînement (2),
un moteur d'entraînement électrique (4), lequel comporte un carter de moteur (5) et lequel est disposé à l'intérieur du carter d'entraînement (2),
un arbre d'entraînement (6) traversant le carter de moteur (5) avec une première section d'arbre (7), laquelle comporte une première extrémité longitudinale libre (8) et laquelle dépasse du carter de moteur (5) sur un premier côté de moteur (9) et une deuxième section d'arbre (10), laquelle dépasse avec une deuxième extrémité longitudinale libre (11) du carter de moteur (5) sur un deuxième côté de moteur (12) opposé au premier côté de moteur (9), et
une vis sans fin d'entraînement (14), laquelle est constituée sur la première section d'arbre (7) de l'arbre d'entraînement (6), et
un élément de compensation mécanique (16), lequel est placé sur le carter d'entraînement (2) et lequel est disposé sur la première extrémité longitudinale libre (8) de l'arbre d'entraînement (6),
sachant que l'élément de compensation mécanique (16) permet un mouvement de l'arbre d'entraînement (6) dans une direction allant du deuxième côté de moteur (12) au premier côté de moteur (9) par rapport au carter d'entraînement (2) contre une force de compensation exercée par le élément de compensation mécanique (16) et pousse la première extrémité longitudinale libre (8) de l'arbre d'entraînement (6) en direction du deuxième côté de moteur (12),
sachant que le carter d'entraînement (2) comporte une cloison de butée (17) avec un évidement (19) dans lequel est disposée la première extrémité longitudinale libre (8) de l'arbre d'entraînement (6) et un élément de limitation (18), sachant que l'élément de compensation mécanique (16) est disposé entre la cloison de butée (17) et l'élément de limitation (18),
**caractérisé en ce que**
l'élément de compensation mécanique (16) comporte un élément de contact (20) dans un matériau résistant à l'usure, lequel s'applique à la première extrémité longitudinale libre (8) de l'arbre d'entraînement (6) et peut être déplacé entre une première position, dans laquelle l'élément de contact (20) s'applique à la cloison de butée (17) et une deuxième position dans laquelle l'élément de contact (20) est disposé à distance de la cloison de butée (17),
sachant qu'un moyen de compensation élastiquement déformable (27) est disposé entre l'élément de contact (20) et l'élément de limitation (18), et
sachant que l'élément de contact (20) est constitué avec un côté de base (29), lequel s'applique dans la première position à la cloison de butée (17) et avec deux bras de limitation de mouvement (30) s'étendant du côté de base (29) en direction de l'élément de limitation (18), lesquels s'appliquent dans la deuxième position à l'élément de limitation (18).

2. Système d'entraînement de véhicule automobile (1) selon la revendication 1, **caractérisé en ce que** l'élément de compensation élastiquement déformable (27) est disposé entre les deux bras de limitation de mouvement (30) et la nervure de retenue (31), laquelle est fixée par conformité de forme dans un évidement de retenue (33) constitué dans le carter d'entraînement (2) et comporte une section de déformation (32).

3. Système d'entraînement de véhicule automobile (1) selon la revendication 2, **caractérisé en ce que** le volume constitué dans la deuxième position entre les deux bras de limitation de mouvement (30) est plus grand que le volume du moyen de compensation élastiquement déformable (27) disposé dans la deuxième position.

4. Système d'entraînement de véhicule automobile (1) selon la revendication 2, **caractérisé en ce que** le moyen de compensation élastiquement déformable (27) est fabriqué dans une première matière plastique et le carter d'entraînement (2) dans une deuxième matière plastique au moyen de moulage par injection à deux composants.

5. Système d'entraînement de véhicule automobile (1) selon la revendication 1, **caractérisé par** un élément de compensation supplémentaire mécanique (35), lequel est placé sur le carter d'entraînement (2) et lequel est disposé sur la deuxième extrémité longitudinale libre (11) de l'arbre d'entraînement (6), sachant que l'élément de compensation supplémentaire mécanique (35) permet un mouvement de l'arbre d'entraînement (6) dans une direction allant du premier côté de moteur (9) vers le deuxième côté de moteur (12) par rapport au carter d'entraînement (2) contre une force de compensation exercée par l'élément de compensation supplémentaire mécanique (35) et pousse la deuxième extrémité longitudinale libre (11) de l'arbre d'entraînement (6) en direction du premier côté de moteur (9).

6. Système d'entraînement de véhicule automobile (1) selon la revendication 5, **caractérisé en ce que** le carter d'entraînement (2) comporte une autre cloison de butée (36) avec un évidement (39) dans lequel est disposée la deuxième extrémité longitudinale libre (11) de l'arbre d'entraînement (6) et un autre élément de limitation (37), sachant que l'élément de compensation supplémentaire mécanique (35) est disposé entre l'autre cloison de butée (36) et l'autre élément de limitation (37) .

7. Système d'entraînement de véhicule automobile (1) selon la revendication 6, **caractérisé en ce que** l'élément de compensation supplémentaire mécanique (35) comporte un autre élément de contact (40) dans un matériau résistant à l'usure, lequel s'applique à la deuxième extrémité longitudinale libre (11) de l'arbre d'entraînement (6) et peut être déplacé entre une première position, dans laquelle l'autre élément de contact (40) s'applique à l'autre cloison de butée (36),et, une deuxième position, dans laquelle l'autre élément de contact (40) est disposé à distance de l'autre cloison de butée (36) .

8. Système d'entraînement de véhicule automobile (1) selon la revendication 7, **caractérisé en ce que** l'autre élément de contact (40) est constitué sous la forme d'une tôle élastique, laquelle est fixée par conformité de force au carter d'entraînement (2).

9. Système d'entraînement de véhicule automobile (1) selon la revendication 7, **caractérisé en ce qu'**un moyen de compensation élastiquement déformable (41) est disposé entre l'autre élément de contact (40) et l'autre élément de limitation (37).

10. Système d'entraînement de véhicule automobile (1) selon la revendication 9, **caractérisé en ce que** l'autre élément de contact (40) est une plaquette de démarrage et l'autre moyen de compensation élastiquement déformable est constitué en forme de plaquette et s'applique à l'autre élément de limitation constitué sous la forme d'une cloison.

11. Système d'entraînement de véhicule automobile (1) selon la revendication 9, **caractérisé en ce que** l'autre élément de contact (40) est constitué avec un côté de base (42), lequel s'applique dans la première position à l'autre cloison de butée (36) et avec deux bras de limitation de mouvement (43) s'étendant du côté de base (42) en direction de l'autre élément de limitation (37), lesquels s'appliquent dans la deuxième position à l'autre élément de limitation (37).
